# EUROPÄISCHE PATENTANMELDUNG

(11) **EP 3 043 626 A1**
(43) Veröffentlichungstag der Anmeldung: **13.07.2016**
(21) Anmeldenummer: 16000003.0
(22) Anmeldetag: 07.01.2016
(51) Int. Cl.: H05B 37/02, H05B 33/08, H05B 35/00, H01J 61/96

(54) **MELDER-EINHEIT MIT INTEGRIERTER NACHT- UND/ODER ORIENTIERUNGSLICHTFUNKTION**

(30) Priorität: 08.01.2015 DE 102015000024
(71) Anmelder: Brück, Dietmar Friedrich, Hongkong (HK)
(72) Erfinder: Brück, Dietmar Friedrich, Hongkong (HK)
(74) Vertreter: Rebbereh, Cornelia

(57) **Zusammenfassung**

Bei einer Melder-Einheit (1) zum bedarfsabhängigen Ein- und/oder Ausschalten und/oder Dimmen zumindest einer ersten Lichtquelle (10), umfassend zumindest eine Einrichtung (2) zum Erkennen einer Bewegung und/oder der Präsenz einer Person in einem Raum sowie eine Einrichtung (5) zum Erfassen der Helligkeit in dem Raum, weist die Melder-Einheit (1) zumindest ein Gehäuse (4) mit zumindest einem Gehäuseteil (40) auf, der auf der zum Raum gerichteten Seite einer Raumwand oder Raumdecke anordbar oder angeordnet ist, wobei im und/oder an dem Gehäuseteil (40) eine zweite Lichtquelle (3) angeordnet ist, und wobei die Anordnung im und/oder an dem Gehäuseteil (40) so erfolgt, dass die Einrichtung (5) zum Erfassen der Helligkeit im Raum gegenüber dem von der zweiten Lichtquelle (3) ausgesandten oder aussendbaren Licht abschattbar oder abgeschattet angeordnet ist. Die Melder-Einheit kann fernbedienbar sein.

## Beschreibung

Die Erfindung betrifft eine Melder-Einheit zum bedarfsabhängigen Ein- und/oder Ausschalten und/oder Dimmen zumindest einer ersten Lichtquelle, wie einer Raumbeleuchtung mit zumindest einer integrierten ersten Lichtquelle, zum Beispiel LEDs, umfassend zumindest eine Einrichtung zum Erkennen einer Bewegung und/oder der Präsenz einer Person in einem Raum sowie eine Einrichtung zum Erfassen der Helligkeit in dem Raum, zum bewegungs- oder präsenzgesteuerten Schalten der ersten Lichtquelle.

Melder-Einheiten in Form von Bewegungs- oder Präsenzmeldern sind im Stand der Technik bekannt. Diese dienen dazu, bei Detektieren der Präsenz und/oder der Bewegung einer Person in einem Detektionsbereich eines Raumes ein Signal auszusenden, mittels dessen die Raumbeleuchtung einschaltet. Bekannt ist ferner, zumindest ein Infrarot-, Präsenz- bzw. Bewegungsmelder-Sensorelement zu verwenden, bei dem die Wärmestrahlung von Personen oder anderen Wärmequellen gemessen wird, die sich im Detektions- bzw. Erfassungsbereich des Sensorelementes bewegen oder aufhalten. Wird in dem überwachten Detektionsbereich nicht mehr die Anwesenheit einer Person festgestellt, kann ein entsprechendes Signal ausgegeben und die Lichtquelle der Raumbeleuchtung wieder ausgeschaltet werden. Üblicherweise werden derartige Melder-Einheiten in Räumen angeordnet, in denen Publikumsverkehr herrscht, wie beispielsweise Treppenhäusern oder Sanitäranlagen (öffentliche Toiletten). Nun kann es insbesondere in öffentlichen Toiletten vorkommen, dass der Melder die Präsenz bzw. Bewegung von Personen nicht mehr erkennt, da sich diese hinter einer separaten Tür und somit außerhalb des Detektionsbereichs des Melders befinden. Somit kann es wünschenswert sein, dass nach Ausschalten des Raumlichtes dennoch eine geringere, weniger Energie verbrauchende Lichtquelle vorhanden ist, die es eventuell noch im Raum befindlichen Personen möglich macht, sich im Raum zurechtzufinden.

Ferner ist es bekannt, dass bei Bewegungs- und/oder Präsenzmeldern zum Beispiel mittels eines lichtabhängigen Widerstandes (LDR), einer Fotodiode oder eines Umgebungshelligkeitssensors die Umgebungshelligkeit gemessen wird. Der funktionelle Unterschied zwischen einem Bewegungsmelder und einem Präsenzmelder ist üblicherweise der, dass eine Melder-Einheit in Form eines Bewegungsmelders die Dunkelheit in einem Raum erkennt und bei Detektieren einer Bewegung beispielsweise die Raumbeleuchtung bzw. das Raumlicht einschaltet. Im Unterschied dazu schaltet ein Präsenzmelder bei Erreichen einer vorgegebenen Helligkeitsschwelle in dem überwachten Raum das Kunstlicht, das von der im Raum befindlichen Lichtquelle ausgesandt wird, wieder aus. Hierdurch wird eine unnötige Beleuchtung des Raumes durch Kunstlicht vermieden und Energie eingespart, da die zumindest eine im Raum befindliche Lichtquelle nur dann eingeschaltet bleibt, wenn dies erforderlich ist.

Ebenso ist bekannt, eine Melder-Einheit in Form eines Präsenzmelders mit einem Drehregler bzw. Potentiometer zu versehen, über den ein Einschaltschwellwert zum Einschalten der Lichtquelle im Raum vorgegeben wird. Sinkt die Umgebungshelligkeit, die von dem Präsenzmelder erfasst wird, unter den Einschaltschwellwert, führt das Erkennen einer Bewegung zum Einschalten der Lichtquelle, beispielsweise des Raumlichtes, durch den Präsenzmelder.

Aus der US 6,888,323 B1 ist ein Lichtmanagementsystem bekannt, das eine Gehäuseeinheit zum Anordnen an einer Wand und einen manuell schaltbaren Schalter zum manuellen Betätigen eines Raumlichts umfasst. Das System umfasst ferner eine Nachtlichteinheit, die dahingehend konfiguriert ist, dass es eine reduzierte Raumbeleuchtung oder eine auf niedrigerem Niveau zur Verfügung stellt, sobald das Raumlicht ausgeschaltet ist. Ferner umfasst das System einen Bewegungssensor zum Betätigen und Einstellen des Raumlichts und/oder der Nachtlichteinheit, basierend auf einer festgestellten Anwesenheit einer Person in einem Raum. Ferner offenbart ist eine Schaltereinheit mit einem Bewegungssenso und einer Nachtlichteinheit, die zwei LEDs umfasst.

Die US 2008/0079568 A1 offenbart ein System und Verfahren, umfassend einen Anwesenheitssensor mit einer Zeitverzögerungsfunktion zum Dimmen von Lampen, beispielsweise als Warnsignal und, nachdem eine erste Zeitspanne vergangen ist, ohne dass die Anwesenheit einer Person in einem Raum festgestellt werden konnte. Die Lampen bleiben gedimmt für eine zweite Zeitspanne und werden danach nach Ablauf einer dritten Zeitspanne ohne Detektion der Anwesenheit einer Person in dem Raum ausgeschaltet. Sofern die Anwesenheit einer Person in einem Raum während der ersten Zeitspanne festgestellt wird, bleiben die Lampen eingeschaltet. Wird während der zweiten oder dritten Zeitspanne die Präsenz einer Person in dem Raum festgestellt, werden die Lampen beispielsweise auf die vorherige Helligkeit eingestellt. Ein Nachtlicht kann ebenfalls hinzugefügt und/oder in oder an dem Bewegungsmelder angeordnet werden, enthaltend das Merkmal des Dimmens.

Aus der US 2010/0207532 A1 ist eine Einrichtung zum Ersetzen von herkömmlichen an einer Wand montierten Lichtschaltern bekannt, die einen Dimmer und einen PIR-Sensor umfasst. Hierbei kann die elektrische Leistung zumindest einer Last manuell oder als Antwort auf Signale, die von dem PIR-Sensor abgegeben werden, variiert werden.

Die DE 10 2009 013 289 A1 offenbart ein Master/Slave-System mit zwei Bewegungsmelder-Einheiten, von denen eine einen Master und einen Bewegungsmelder aufweist und die andere einen Slave als Nebenstelle. Der Master weist eine in Form eines Spannungssignalsenders ausgebildete Master-Sendestufe zum Übermitteln eines dem aktuellen Schaltzustand der Beleuchtungseinrichtung entsprechenden Signals auf, ebenso eine in Form eines Stromsignalempfängers ausgebildete Master-Empfangsstufe für den Empfang von Signalen der zumindest einen Nebenstelle. Der Slave weist eine in Form eines Spannungssignalempfängers ausgebildete Slave-Empfangsstufe für den Empfang eines dem aktuellen Schaltzustand der Beleuchtungseinrichtung entsprechenden Signals auf. Der Slave weist ferner eine in Form eines Stromsignalsenders ausgebildete Slave-Sendestufe zum Übermitteln von Signalen zur Ansteuerung des Masters auf.

Der vorliegenden Erfindung liegt daher die Aufgabe zugrunde, eine gegenüber dem Stand der Technik verbesserte Melder-Einheit vorzusehen, die ein energieeffizientes Schalten einer Raumbeleuchtung mit zumindest einer integrierten ersten Lichtquelle bzw. eines Raumlichtes ermöglicht, wobei das Raumlicht auch manuell einschaltbar sein soll, und die Melder-Einheit auch die Funktion eines Nacht- und/oder Orientierungslichtes bieten soll, um Personen, die sich im Raum, aber außerhalb des Detektionsbereiches der Melder-Einheit befinden, die Orientierung zu ermöglichen, ohne dass das mehr Energie verbrauchende Raumlicht eingeschaltet ist oder wird.

Die Aufgabe wird durch eine Melder-Einheit nach dem Oberbegriff des Anspruchs 1 dadurch gelöst, dass die Melder-Einheit zumindest ein Gehäuse mit zumindest einem Gehäuseteil aufweist, der auf der zum Raum gerichteten Seite einer Raumwand oder Raumdecke anordbar oder angeordnet ist und im und/oder an dem Gehäuseteil eine zweite Lichtquelle angeordnet ist, wobei die Anordnung im und/oder an dem Gehäuseteil so erfolgt, dass die Einrichtung zum Erfassen der Helligkeit im Raum gegenüber dem von der zweiten Lichtquelle ausgesandten oder aussendbaren Licht abschattbar oder abgeschattet angeordnet ist. Weiterbildungen der Erfindung sind in den abhängigen Ansprüchen definiert.

Dadurch wird eine Kombination aus einem Präsenz- bzw. Bewegungsmelder und einem Nacht- und/oder Orientierungslicht, das durch die zumindest eine zweite Lichtquelle vorgesehen ist, geschaffen, die die Vorteile eines Präsenz- bzw. Bewegungsmelders mit den Vorteilen eines Nacht- und/oder Orientierungslichts verknüpft. Dabei kann die Melder-Einheit mit einem an bzw. in der Wand befindlichen herkömmlichen Schalter- bzw. Tasterelement verbunden sein, wobei das Raumlicht, also die zumindest eine erste Lichtquelle, auch manuell durch Betätigen des Schalter- bzw. Tasterelements zumindest eingeschaltet werden kann.

In der Melder-Einheit ist die zumindest eine zweite Lichtquelle, zum Beispiel in Form zumindest einer Leuchtdiode (LED) oder einer Anzahl von LEDs, integriert. Die Integration erfolgt in und/oder an dem Gehäuseteil, vorzugsweise in oder an einem äußeren Gehäusering des Gehäuses der Melder-Einheit, derart, dass die Einrichtung zum Erfassen der Helligkeit im Raum, also insbesondere ein Lichtsensor, durch das von der zumindest einen zweiten Lichtquelle abgestrahlte Licht nicht negativ beeinflusst wird. Dies erfolgt vorteilhaft durch Abschatten der Einrichtung zum Erfassen der Helligkeit im Raum gegenüber der oder Abschotten von der zweiten Lichtquelle. Hierdurch wird verhindert, dass das von der zweiten Lichtquelle ausgesandte bzw. abgestrahlte Licht die Helligkeitserfassung durch die Einrichtung zum Erfassen der Helligkeit beeinflusst bzw. stört. Durch das Abschatten bzw. Abschotten der Einrichtung zum Erfassen der Helligkeit in einem Raum gegenüber dem von der zweiten Lichtquelle ausgesandten Licht kann verhindert werden, dass die Einrichtung zum Erfassen der Helligkeit in einem Raum das von der zweiten Lichtquelle ausgesandte Licht oder Streulicht als Raumlicht interpretiert und somit dessen Helligkeit als Raumhelligkeit.

In der Melder-Einheit ist vorteilhaft zumindest eine Einrichtung zum Einstellen einer oder mehrerer Lichtstärken der zumindest einen zweiten Lichtquelle und zumindest eine Steuereinheit vorgesehen, wobei die Auswahl aus der Menge an eingestellten Lichtstärken durch die Steuereinheit erfolgen kann. Die Werte der Lichtstärken, die über die Steuereinheit ausgewählt werden können, können über Einstelleinrichtungen, wie Potentiometer, eingestellt werden. Durch das Einstellen der Anzahl von Lichtstärke-Werten ergibt sich eine Menge an auswählbaren Lichtstärke-Werten, aus der die Steuereinheit je nach gewünschtem Modus, in dem die Melder-Einheit arbeitet oder arbeiten soll, z.B. dem Modus eines Nachtlichts oder Orientierungslichts, eine geeignete Auswahl treffen kann. Ferner kann durch einen vorteilhaft vorgesehenen Helligkeitssensor die Umgebungshelligkeit in dem die Melder-Einheit umgebenden Raum, der durch die Raumbeleuchtung, gesteuert von der mit der Melder-Einheit zusammenwirkenden Steuereinheit, beleuchtet werden soll, erfasst und mit einem vorgebbaren oder vorgegebenen Dämmerungsschwellwert verglichen werden. Sinkt die Umgebungshelligkeit im Raum unter den vorgegebenen Dämmerungsschwellwert, so kann die zumindest eine zweite Lichtquelle aktiviert werden, um Licht auszusenden. Wird eine Bewegung oder die Präsenz einer Person in dem Raum erkannt, so kann die zumindest eine zweite Lichtquelle von einer ersten vorgebbaren oder vorgegebenen Lichtstärke oder Lichtintensität zu einer zweiten vorgebbaren oder vorgegebenen Lichtstärke oder Lichtintensität, die z.B. höher als die erste ist, wechseln. Die zweite Lichtstärke kann ferner geringer als die erste Lichtstärke bzw. -intensivität oder mit dieser gleich sein. Ferner kann bei Erkennen einer Bewegung oder der Präsenz einer Person im Raum die zumindest eine zweite Lichtquelle ausgeschaltet und die vorgesehene Raumbeleuchtung mit der zumindest einen ersten Lichtquelle eingeschaltet werden. Auch ohne Erfassen einer Bewegung oder Präsenz einer Person im Raum kann bei Erfassen abnehmender Umgebungshelligkeit in der Umgebung der Melder-Einheit ein Einschalten der zumindest einen zweiten Lichtquelle mit einer ersten Lichtstärke oder Lichtintensität durch die Melder-Einheit bzw. den Helligkeitssensor ausgelöst werden. Hierdurch kann ermöglicht werden, dass sich im Raum, aber außerhalb des Detektionsbereichs der Melder-Einheit befindliche Personen im Raum zurechtfinden können. Dies ist beispielsweise in öffentlichen Toilettenanlagen der Fall, wenn sich die im Raum befindliche Person hinter einer geschlossenen Kabinentür aufhält. Hierdurch kann ferner ermöglicht werden, dass ein zum Einschalten der ersten Lichtquelle vorgesehene, insbesondere in einer Wand des Raums angeordnete Schalter- bzw. Tasterelement schnell gefunden werden kann, wenn ein manuelles Einschalten der ersten Lichtquelle, also der Raumbeleuchtung, gewünscht wird.

Die Melder-Einheit kann mittels Drehreglers oder Potentiometers einstellbar oder verstellbar sein. Alternativ oder zusätzlich kann die Melder-Einheit fernbedienbar sein. Hierbei kann eine Fernansteuerung der Melder-Einheit unter Verwenden zumindest eines Fernbedienungselements oder einer Fernbedienung erfolgen. Dadurch können die Einstellungen der z. B. an einer Raumdecke angebrachten Melder-Einheit auf einfache Weise ohne Verwendung einer Leiter o.Ä. vom Boden des Raumes aus geändert bzw. modifiziert werden. Dabei wird bevorzugt, dass alle mittels Drehreglers bzw. Potentiometers einstellbaren Parameter der Melder-Einheit auch fernbedienbar geändert bzw. modifiziert werden können, insbesondere die Werte für Nachlaufzeiten und die Helligkeits-Schwellenwerte zum Ein- und/oder Ausschalten der ersten und der zweiten Lichtquelle. Als weitere Option kann vorgesehen werden, dass in der Melder-Einheit nicht nur ein Empfangs-, sondern auch ein Sendeelement enthalten ist, so dass die Kommunikation mit der Melder-Einheit bidirektional erfolgen kann. Dadurch kann beispielsweise ermöglicht werden, dass die Melder-Einheit den an der Raumdecke gemessenen Lichtwert bzw. Lichtstärkewert zum Fernbedienungselement übertragen kann oder Informationen zur Software-Variante der Melder-Einheit an eine die Melder-Einheit bedienende Person übermittelt werden können. Die Fernbedienung der Melder-Einheit kann sowohl mittels eines herkömmlichen, im Stand der Technik bekannten Fernbedienungselementes erfolgen als auch durch eine Software zur Fernbedienung, die beispielsweise auf einem tragbaren Computer bzw. PC oder einer mobilen Kommunikationseinrichtung, insbesondere einem Smartphone, installiert ist.

Vorteilhaft ist die zweite Lichtquelle im oder am äußeren Gehäusering des Gehäuses der Melder-Einheit angeordnet, so dass verhindert werden kann, dass Streustrahlung des von der zweiten Lichtquelle ausgesandten Lichts in die restliche Melder-Einheit fällt. Ein solcher Einfall von Streulicht würde ansonsten eine Helligkeitsmessung (durch die Einrichtung zum Erfassen der Helligkeit im Raum) verfälschen, die zur Entscheidung des Einschaltens der zweiten Lichtquelle vorteilhaft vorgesehen ist.

Die zumindest eine zweite Lichtquelle kann zumindest eine an die Formgebung des Gehäuseteils der Melder-Einheit angepasste streifenförmige Aneinanderreihung von Leuchtdioden (LEDs) sein oder umfassen. Insbesondere ist ein an die Form des Gehäuses der Melder-Einheit angepasster Streifen aus LEDs vorgesehen, der sich im äußeren Gehäuserand befindet. Die Lichtfarbe kann beispielsweise 3000 Kelvin betragen.

Die zumindest eine zweite Lichtquelle der Melder-Einheit kann dimmbar ausgebildet und eine Einrichtung zum Dimmen vorgesehen sein. Vorteilhaft kann die zumindest eine zweite Lichtquelle dabei wahlweise konstant und/oder präsenzgesteuert, unter Berücksichtigung der im Raum herrschenden Lichtverhältnisse schalten. Durch die Möglichkeit eines Dimmens kann die zweite Lichtquelle zunächst mit nur geringer Helligkeit, also einer vorgebbaren oder vorgegebenen ersten Lichtstärke oder -intensität, zum Leuchten gebracht werden, beispielsweise für den permanenten Betrieb bei Feststellen eines Helligkeitsverlusts, also eines Unterschreitens eines vorgegebenen oder vorgebbaren Dämmerungsschwellwerts, in der Umgebung der Melder-Einheit, wie bei eintretender Dämmerung und Dunkelheit. Wird durch das zumindest eine Sensorelement eine Bewegung im Raum und/oder die Präsenz einer Person/Wärmequelle erkannt, kann die zweite Lichtquelle eine andere Lichtmenge mit einer zweiten vorgebbaren oder vorgegebenen Lichtstärke oder Lichtintensität abgeben bzw. aussenden, also vorzugsweise heller leuchten.

Bei Erfassen einer Präsenz und/oder Bewegung einer Person im Raum kann die zweite Lichtquelle eingeschaltet bleiben, also mit der zweiten Lichtstärke oder -intensität leuchten. Sobald keine Bewegung und/oder Präsenz einer Person im Raum mehr erkannt wird, kann die zweite Lichtquelle nach Ablauf einer möglichen einstellbaren Nachlaufzeit wieder ausgeschaltet werden, das heißt, wieder mit der ersten Lichtstärke oder -intensität leuchten.

Die Raumbeleuchtung eines Raumes, also die erste Lichtquelle, kann durch manuelles Betätigen des insbesondere in oder an der Wand des Raums befindlichen und mit der Melder-Einheit verbundenen Schalter- bzw. Tasterelements eingeschaltet werden. Ferner ist es möglich, dass die Raumbeleuchtung von der Melder-Einheit automatisch eingeschaltet wird. Das Einschalten der Raumbeleuchtung kann somit manuell über Betätigen des mit der Melder-Einheit verbundenen Schalter- bzw. Tasterelements oder automatisch durch die Melder-Einheit gesteuert werden. Beim automatischen ebenso wie beim manuellen Einschalten der Raumbeleuchtung über die Melder-Einheit kann ein Dimmen der Raumbeleuchtung vorgesehen werden, insbesondere eine mit zunehmender Zeit ansteigende Helligkeit einer entsprechenden Lichtquelle der Raumbeleuchtung. Durch das Einschalten der Raumbeleuchtung, sei es automatisch oder manuell, kann die zumindest eine zweite Lichtquelle ausgeschaltet werden. Dies kann ebenfalls automatisch abrupt oder unter Dimmen erfolgen.

Die Melder-Einheit umfasst somit einerseits das zumindest eine Sensorelement zur Präsenz- und/oder Bewegungserfassung und andererseits den zumindest einen Helligkeitssensor zum Erfassen der Umgebungshelligkeit in der Umgebung der Melder-Einheit, so dass einerseits die zumindest eine zweite Lichtquelle angesteuert werden kann und andererseits ein Dimmen bzw. Einschalten der Raumbeleuchtung entsprechend dem detektierten Signal des zumindest einen Sensorelements ermöglicht wird. Die zumindest eine zweite Lichtquelle kann permanent mit einer vergleichsweise geringen Helligkeit, welche vorzugsweise der ersten Lichtstärke entspricht, leuchten und dabei als sog. Nachtlicht dienen, oder mit einer größeren Helligkeit, welche vorzugsweise der zweiten Lichtstärke entspricht, leuchten und dabei als sog. Orientierungslicht dienen. Ferner kann die zumindest eine zweite Lichtquelle der Melder-Einheit lediglich dann eingeschaltet werden, wenn durch das zumindest eine Sensorelement eine abnehmende Helligkeit im Raum und/oder eine Präsenz und/oder Bewegung einer Person im Raum wahrgenommen wird, so dass eine den Raum betretende Person das mit der Melder-Einheit verbundene und insbesondere in oder an der Wand befindliche Schalter- bzw. Tasterelement auffindet und betätigen kann. Wird das Schalter- bzw. Tasterelement nicht betätigt, kann bei weiter festgestellter Präsenz und/oder Bewegung der Person im Raum durch das Sensorelement ein Signal zum Einschalten der Raumbeleuchtung abgegeben werden bzw. durch die Auswertung einer Steuereinheit das Präsenz- und/oder Bewegungssignal, das an dem Sensorelement erfasst wird, zum Einschalten der Raumbeleuchtung durch die Steuerungseinheit und bei nicht mehr festgestelltem Präsenzsignal und/oder Bewegungssignal zum Ausschalten der Raumbeleuchtung verwendet werden. Das Ausschalten der Raumbeleuchtung kann mit einer vorgebbaren Nachlaufzeit erfolgen.

Eine in Richtung nach außen (bezüglich des Gehäuses der Melder-Einheit) über der Einrichtung zum Erkennen einer Bewegung und/oder der Präsenz einer Person in einem Raum und/oder der Einrichtung zum Erfassen der Helligkeit in dem Raum angeordnete Linseneinheit kann bezüglich ihres Erfassungsbereichs unterschiedlich gewählt werden. Dazu können beispielsweise kugelförmige Linsenformen und Linsenoptiken, zum Beispiel Fresnel-Linsen, verwendet werden.

Zur näheren Erläuterung der Erfindung wird im Folgenden ein Ausführungsbeispiel von dieser näher anhand der Zeichnungen beschrieben. Diese zeigen in:
- Figur 1: eine Längsschnittansicht einer Ausführungsvariante einer erfindungsgemäßen Melder-Einheit,
- Figur 2: eine Ansicht von unten auf die Melder-Einheit gemäß Figur 1, und
- Figur 3: eine perspektivische Ansicht der Melder-Einheit gemäß Figur 1.

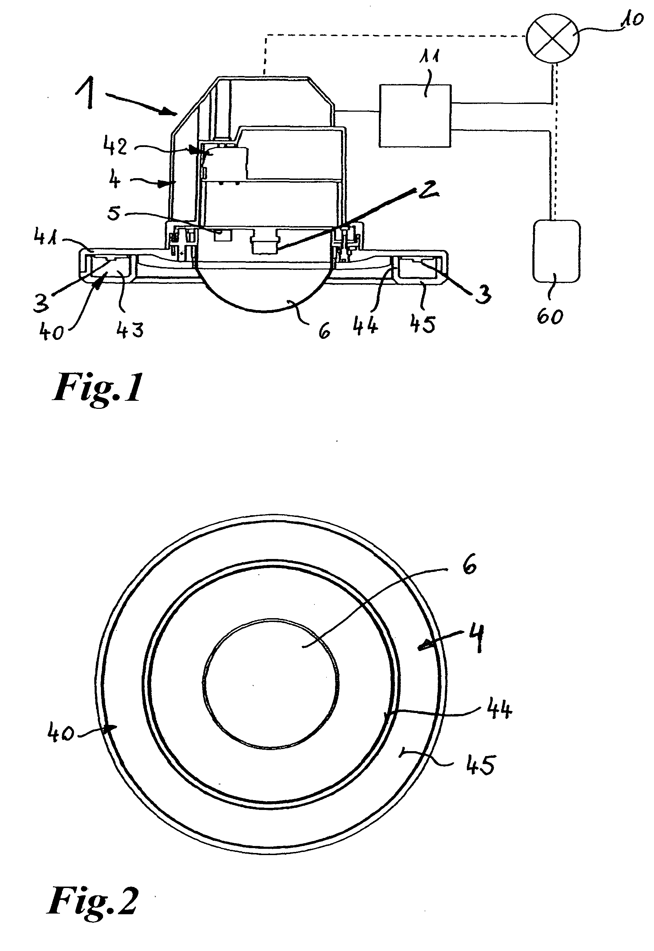

In Figur 1 ist eine Melder-Einheit 1 zum bedarfsabhängigen Ein- und/oder Ausschalten und/oder Dimmen zumindest einer ersten Lichtquelle 10 einer Raumbeleuchtung gezeigt. Die Melder-Einheit 1 weist ein Gehäuse 4 auf, in dem verschiedene Komponenten der Melder-Einheit 1 aufgenommen sind, wie z.B. eine Einrichtung 2 zum Erkennen einer Bewegung und/oder der Präsenz einer Person in einem Raum und eine Einrichtung 5 zum Erfassen der Helligkeit in dem Raum. Zu dem Raum gerichtet sind die Einrichtungen 2 und 5 von einer Linseneinheit 6 überdeckt. Diese kann bezüglich ihres Erfassungsbereichs unterschiedlich gewählt werden, z.B. können kugelförmige Linsenformen und Linsenoptiken, zum Beispiel Fresnel-Linsen, verwendet werden.

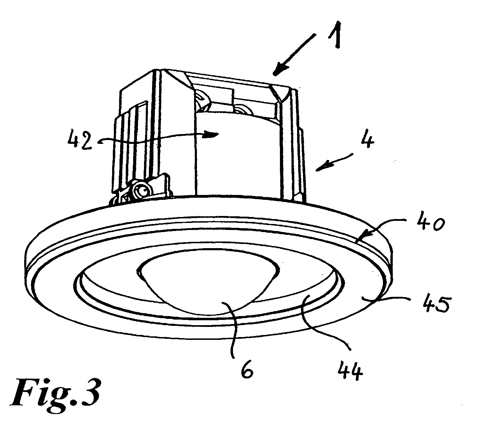

Wie den Figuren 1 und 3 weiter entnommen werden kann, erstreckt sich in Höhe der Basis der Linseneinheit 6, diese ringsherum umgebend ein Gehäuseteil in Form eines Gehäuserings 40. Dieser ist über einen tellerartigen Gehäuseteil 41, mit dem der Gehäusering 40 verbunden ist, mit einem die übrigen Komponenten der Melder-Einheit 1 aufnehmenden Gehäuseteil 42 verbunden. Der Gehäusering 40 weist einen inneren Hohlraum 43 auf, in dem eine zweite Lichtquelle 3 angeordnet ist. Diese ist beispielsweise in Form von Leuchtdioden (LEDs), die streifenförmig aneinandergereiht sind, ausgebildet. Die Formgebung des aus den aneinandergereihten LEDs gebildeten Streifens ist vorteilhaft der Formgebung des Gehäuserings 40 angepasst. Die zweite Lichtquelle 3 ist in der in Figur 1 gezeigten Ausführungsvariante an dem tellerartigen Gehäuseteil 41 im Innern des Gehäuserings 40 angeordnet.

Wie aus den Figuren 1 und 3 weiter ersichtlich ist, ragt in der dort gezeigten Ausführungsvariante der Melder-Einheit 1 die Linseneinheit 6 über die äußere Flächenerstreckung des Gehäuserings 40 hinaus. Dies kann ggf. auch anders sein. Wie besonders gut Figur 2 entnommen werden kann, ist der Gehäuseteil bzw. Gehäusering 40 in der Draufsicht etwa rund ausgebildet, wobei grundsätzlich auch eine andere Formgebung möglich wäre. Wie man ferner der Figur 2 entnehmen kann, sind die Linseneinheit 6 und der Gehäusering 40 voneinander beabstandet, und der Gehäusering 40 weist eine umlaufende Wandung 44 in Richtung zu der Linseneinheit 6 auf. Durch diese wird die Einrichtung 5 zum Erfassen der Helligkeit im Raum gegenüber dem von der/den im Innern des Gehäuserings 40 angeordneten zweiten Lichtquelle(n) ausgesandten Licht abgeschirmt, abgeschattet oder abgeschottet. Hierdurch wird somit verhindert, dass Streulicht von der zweiten Lichtquelle 3 auf die Einrichtung 5 zum Erfassen der Helligkeit in dem Raum fällt und das Ergebnis der Helligkeitsmessung verfälscht.

In Richtung zu dem Raum kann eine Wandung 45 des Gehäuserings 40 transluzent oder transparent ausgebildet sein, um das von der zumindest einen dritten Lichtquelle 3 ausgesandte Licht in den Raum senden zu können bzw. außerhalb der Melder-Einheit 1 wahrnehmen zu können.

Der Melder-Einheit 1 kann eine Steuereinheit 11 zugeordnet sein oder die Melder-Einheit diese umfassen. Die Steuereinheit 11 dient dem Ansteuern der Lichtquellen 3 und 10 bzw. der Melder-Einheit 1 in verschiedenen Moden. Als Ausführungsbeispiele werden nachstehend ein Halbautomatikmodus und ein Vollautomatikmodus der Melder-Einheit 1 bzw. Steuereinheit 11 von dieser genauer beschrieben.

Im Halbautomatikmodus wird bei einem Unterschreiten eines bestimmten Helligkeitswerts automatisch die zweite Lichtquelle 3 mit einer ersten Lichtstärke eingeschaltet. Bei Erkennen einer Bewegung bzw. der Präsenz einer Person im Raum bzw. Erfassungsbereich der Melder-Einheit 1 wird die zweite Lichtquelle 3 dahingehend angesteuert, dass sie Licht mit einer zweiten Lichtstärke aussendet. Nach Ablauf einer vorgebbaren oder vorgegebenen Nachlaufzeit leuchtet die zweite Lichtquelle 3 wieder mit der ersten Lichtstärke (z.B. als Nachtlicht). Wird während der Nachlaufzeit, in der die zweite Lichtquelle 3 Licht mit der zweiten Lichtstärke aussendet, durch manuelles Betätigen eines mit der Melder-Einheit 1 verbundenen Schalter- bzw. Tasterelements 60 die erste Lichtquelle 10 der Raumbeleuchtung eingeschaltet, so wird die zweite Lichtquelle 3 vollständig ausgeschaltet. Sobald die erste Lichtquelle 10 bzw. die Raumbeleuchtung ausgeschaltet wird, sei es durch Betätigen des mit der Melder-Einheit 1 verbundenen Schalter- bzw. Tasterelements 60 oder automatisch nach Ablauf der Nachlaufzeit, leuchtet die zweite Lichtquelle 3 wieder mit der ersten Lichtstärke (z.B. als Nachtlicht).

Im Vollautomatikmodus wird bei Unterschreiten eines bestimmten Helligkeitswerts automatisch die zweite Lichtquelle 3 mit der ersten Lichtstärke eingeschaltet. Bei Erkennen einer Bewegung bzw. der Präsenz einer Person im Raum bzw. Erfassungsbereich der Melder-Einheit 1 wird die zweite Lichtquelle 3 ausgeschaltet und die Raumbeleuchtung eingeschaltet. Wird keine Bewegung oder Präsenz einer Person im Raum bzw. Erfassungsbereich der Melder-Einheit 1 mehr erkannt, so leuchtet nach Ablauf einer vorgebbaren oder vorgegebenen Nachlaufzeit die zweite Lichtquelle 3 wieder mit der ersten Lichtstärke. Wird durch manuelles Betätigen des mit der Melder-Einheit 1 verbundenen Schalter- bzw. Tasterelements 60 die erste Lichtquelle 10 bzw. die Raumbeleuchtung ausgeschaltet, obwohl eine Bewegung bzw. die Präsenz einer Person im Raum bzw. Erfassungsbereich der Melder-Einheit 1 erkannt wird, so wird die zweite Lichtquelle 3 mit der zweiten Lichtstärke eingeschaltet. Wird danach keine Bewegung bzw. Präsenz einer Person im Raum bzw. Erfassungsbereich der Melder-Einheit 1 mehr erkannt, leuchtet die zweite Lichtquelle 3 nach Ablauf der vorgebbaren oder vorgegebenen Nachlaufzeit automatisch wieder mit der ersten Lichtstärke.

Sowohl im Halb- als auch im Vollautomatikmodus wird bei eingeschalteter Raumbeleuchtung bei nochmaligem Betätigen des mit der Melder-Einheit 1 verbundenen Schalter- bzw. Tasterelements 60 die zumindest eine erste Lichtquelle 10 bzw. die Raumbeleuchtung ausgeschaltet und die zweite Lichtquelle 3 als Orientierungslicht wieder eingeschaltet. Letztere kann nach Ablauf einer Nachlaufzeit bzw. automatisch wieder bezüglich seiner Lichtstärke auf die erste Lichtstärke umgeschaltet bzw. vollständig ausgeschaltet werden.

Des Weiteren können mehrere Melder-Einheiten 1 miteinander gekoppelt werden, um den Erfassungsbereich zu erweitern. Dazu ist es möglich, in einer Ausführungsvariante die Melder-Einheit 1 in Form eines Master-Gerätes, welche die Steuereinheit 11 umfasst, und als weitere Ausführungsvariante die Melder-Einheit 1 als Slave-Gerät ohne eine Steuereinheit 11 auszubilden. Dies bietet den Vorteil, dass die Melder-Einheit 1 in Form des Slave-Gerätes kostengünstiger hergestellt werden kann, was für den Käufer eine Kostenersparnis darstellt. Die Slave-Geräte können über das Master-Gerät angesteuert werden. Das Vorsehen von Master-Gerät und zumindest einem Slave-Gerät bringt auch den Vorteil mit sich, dass der Erfassungsbereich der als Master-Gerät arbeitenden Melder-Einheit 1 erweitert wird, wobei das von der zweiten Lichtquelle 3 aus- oder abgestrahlte Licht zum Beleuchten des gesamten Raums dient.

Zum Einstellen der Lichtstärke bzw. Menge des von den Leuchtdioden der zweiten Lichtquelle 3 ausgesandten Lichts können Potentiometer oder andere Einstelleinrichtungen vorgesehen werden, die insbesondere in der Melder-Einheit 1 hinter einem ersten Abdeckelement bzw. einem Gehäuseteil angeordnet sind. Es liegen nach dem Einstellen insbesondere mehrere Lichtstärke-Werte vor, wobei die Steuereinheit 11 dazu dient, die jeweilige Auswahl des für die gewünschte Funktionsweise bzw. den gewünschten Modus der Melder-Einheit 1 geeigneten Lichtstärke-Werts aus dieser eingestellten Menge an Lichtstärke-Werten vorzunehmen.

Neben den im Vorstehenden beschriebenen und in dem Ausführungsbeispiel gezeigten Ausführungsvarianten einer erfindungsgemäßen Melder-Einheit zum bedarfsabhängigen Ein- und Ausschalten sowie Dimmen einer ersten und einer zweiten Lichtquelle, umfassend zumindest eine Einrichtung zum Erkennen einer Bewegung und/oder der Präsenz einer Person in einem Raum sowie eine Einrichtung zum Erfassen der Helligkeit in einem Raum können noch zahlreiche weitere vorgesehen werden, auch beliebige Kombinationen der vorgenannten Merkmale, bei denen jeweils eine zweite Lichtquelle zum Vorsehen eines Nacht- und/oder Orientierungslichts vorgesehen ist, die dimmbar ist und wahlweise konstant und/oder präsenzgesteuert, unter Berücksichtigung der im Raum herrschenden Lichtverhältnisse schaltet bzw. bei denen die die Melder-Einheit zumindest ein Gehäuse mit zumindest einem Gehäuseteil aufweist, der auf der zum Raum gerichteten Seite einer Raumwand oder Raumdecke angeordnet ist oder werden kann, und im und/oder an dem Gehäuseteil eine zweite Lichtquelle angeordnet ist, wobei die Anordnung im und/oder an dem Gehäuseteil so erfolgt, dass die Einrichtung zum Erfassen der Helligkeit im Raum gegenüber dem von der zweiten Lichtquelle ausgesandten oder aussendbaren Licht abschattbar oder abgeschattet angeordnet ist.

### Bezugszeichenliste

- 1: Melder-Einheit
- 2: Einrichtung zum Erkennen einer Bewegung und/oder Präsenz einer Person
- 3: zweite Lichtquelle
- 4: Gehäuse
- 5: Einrichtung zum Erfassen der Helligkeit in einem Raum
- 6: Linseneinheit
- 10: erste Lichtquelle/Raumbeleuchtung
- 11: Steuereinheit
- 40: Gehäuseteil/äußerer Gehäusering
- 41: tellerartiger Gehäuseteil
- 42: Gehäuseteil
- 43: innerer Hohlraum
- 44: umlaufende Wandung
- 45: Wandung
- 60: Schalter- bzw. Tasterelement

## Patentansprüche

1. Melder-Einheit (1) zum bedarfsabhängigen Ein- und/oder Ausschalten und/oder Dimmen zumindest einer ersten Lichtquelle (10), umfassend zumindest eine Einrichtung (2) zum Erkennen einer Bewegung und/oder der Präsenz einer Person in einem Raum sowie eine Einrichtung (5) zum Erfassen der Helligkeit in dem Raum,
**dadurch gekennzeichnet, dass**
die Melder-Einheit (1) zumindest ein Gehäuse (4) mit zumindest einem Gehäuseteil (40) aufweist, der auf der zum Raum gerichteten Seite einer Raumwand oder Raumdecke anordbar oder angeordnet ist und im und/oder an dem Gehäuseteil (40) eine zweite Lichtquelle (3) angeordnet ist, wobei die Anordnung im und/oder an dem Gehäuseteil (40) so erfolgt, dass die Einrichtung (5) zum Erfassen der Helligkeit im Raum gegenüber dem von der zweiten Lichtquelle (3) ausgesandten oder aussendbaren Licht abschattbar oder abgeschattet angeordnet ist.

2. Melder-Einheit (1) nach Anspruch 1,
**dadurch gekennzeichnet, dass**
die zumindest eine zweite Lichtquelle (3) zumindest eine Leuchtdiode (LED) ist.

3. Melder-Einheit (1) nach Anspruch 1 oder 2,
**dadurch gekennzeichnet, dass**
die zumindest eine zweite Lichtquelle (3) zumindest eine an die Formgebung des Gehäuseteils (40) der Melder-Einheit angepasste streifenförmige Aneinanderreihung von Leuchtdioden (LEDs) ist oder umfasst.

4. Melder-Einheit (1) nach einem der vorstehenden Ansprüche,
**dadurch gekennzeichnet, dass**
die zweite Lichtquelle (3) dimmbar ausgebildet und zumindest eine Einrichtung zum Dimmen vorgesehen ist.

5. Melder-Einheit (1) nach Anspruch 4,
**dadurch gekennzeichnet, dass**
die zweite Lichtquelle (3) wahlweise konstant und/oder präsenzgesteuert, unter Berücksichtigung der im Raum herrschenden Lichtverhältnisse schaltet.

6. Melder-Einheit (1) nach einem der vorstehenden Ansprüche,
**dadurch gekennzeichnet, dass**
zumindest eine Einrichtung zum Einstellen einer oder mehrerer Lichtstärken der zumindest einen zweiten Lichtquelle (3) und zumindest eine Steuereinheit (11) vorgesehen sind, wobei eine Auswahl aus der Menge an eingestellten Lichtstärken durch die Steuereinheit (11) erfolgt.

7. Melder-Einheit (1) nach einem der vorstehenden Ansprüche,
**dadurch gekennzeichnet, dass**
die Melder-Einheit (1) fernbedienbar ist und eingestellte Parameter der Melder-Einheit (1) über zumindest ein Fernbedienungselement oder eine Fernbedienungseinheit veränderbar oder modifizierbar sind.

8. Melder-Einheit (1) nach Anspruch 7 ,
**dadurch gekennzeichnet, dass**
eine bidirektionale Kommunikation zwischen dem Fernbedienungselement oder der Fernbedienungseinheit und der Melder-Einheit (1) ermöglicht oder vorgesehen ist.

9. Melder-Einheit (1) nach einem der vorstehenden Ansprüche,
**dadurch gekennzeichnet, dass**
die oder eine Steuereinheit (11) die zweite Lichtquelle (3) dahingehend ansteuert, dass diese mit einer ersten Lichtstärke oder -intensität bzw. einem ersten Helligkeitswert leuchtet, sobald der von der Einrichtung zum Erfassen der Helligkeit im Raum gemessene Wert einen vorbestimmten Heiligkeits-Schwellenwert unterschreitet.

10. Melder-Einheit (1) nach einem der vorstehenden Ansprüche,
**dadurch gekennzeichnet, dass**
die oder eine Steuereinheit (11) die zweite Lichtquelle (3) dahingehend ansteuert, dass diese von der ersten Lichtstärke oder -intensität bzw. dem ersten Helligkeitswert zu einer voreingestellten zweiten Lichtstärke oder Lichtintensität bzw. einem voreingestellten zweiten Helligkeitswert wechselt, die bzw. der insbesondere höher als der erste Helligkeitswert/die erste Lichtstärke oder-intensität ist, wenn eine Bewegung oder Präsenz durch die Einrichtung (2) zum Erkennen einer Bewegung und/oder der Präsenz einer Person in einem Raum detektiert wird.

11. Melder-Einheit (1) nach Anspruch 9 und 10,
**dadurch gekennzeichnet, dass**
die oder eine Steuereinheit (11) die zweite Lichtquelle (3) dahingehend ansteuert, dass diese nach Ablauf einer voreingestellten Nachlaufzeit wieder zu der ersten Lichtstärke oder -intensität bzw. zum ersten Helligkeitswert wechselt, wenn der von der Einrichtung zum Erfassen der Helligkeit im Raum erfasste Helligkeitswert weiterhin einen vorbestimmten Helligkeits-Schwellwert unterschreitet, jedoch keine Bewegung oder Präsenz im Raum mehr erkannt wird.

12. Melder-Einheit (1) nach einem der vorstehenden Ansprüche,
**dadurch gekennzeichnet, dass**
die erste Lichtquelle (10) wahlweise manuell einschaltbar und danach von der Melder-Einheit (1) ansteuerbar ist oder angesteuert wird oder ausschließlich eine Ansteuerung durch die Melder-Einheit (1) vorgesehen ist.

13. Melder-Einheit (1) nach einem der vorstehenden Ansprüche,
**dadurch gekennzeichnet, dass**
die Melder-Einheit (1) die Steuereinheit (11) umfasst oder die Steuereinheit (11) getrennt von der Melder-Einheit (1) ausgebildet und vorgesehen ist.

14. Melder-System mit zumindest zwei Melder-Einheiten (1) nach einem der vorstehenden Ansprüche,
**dadurch gekennzeichnet, dass**
eine eine Steuereinheit (11) umfassende Melder-Einheit (1) als Master-Gerät ausgebildet ist und zumindest eine ohne Steuereinheit ausgebildete Melder-Einheit (1) als Slave-Gerät vorgesehen ist, um den Erfassungsbereich der als Master-Gerät arbeitenden Melder-Einheit (1) zu erweitern, wobei das von der zweiten Lichtquelle (3) der Melder-Einheit(en) (1) ausgestrahlte Licht zum Beleuchten eines gesamten Raums dient.
